# EUROPEAN PATENT SPECIFICATION

(11) **EP 2 963 289 B1**
(45) Date of publication and mention of the grant of the patent: **05.04.2017**
(21) Application number: 15156767.4
(22) Date of filing: 26.02.2015
(51) Int. Cl.: F03D 80/30, F03D 1/00, F03D 1/06

(54) **WIND TURBINE BLADE AND METHOD OF REPAIRING THE SAME**
WINDTURBINENBLATT UND REPARATURVERFAHREN DAFÜR
PALE D'ÉOLIENNE ET PROCÉDÉ DE RÉPARATION DE CELLE-CI

(30) Priority: 30.06.2014 JP 2014133624
(43) Date of publication of application: 06.01.2016
(73) Proprietor: MITSUBISHI HEAVY INDUSTRIES, LTD., Tokyo 108-8215 (JP)
(72) Inventor: Kawazoe, Kohei, Tokyo, 108-8215 (JP); Esaki, Kouji, Tokyo, 108-8215 (JP); Miura, Kazuhiro, Tokyo, 108-8215 (JP); Fujioka, Hideyasu, Tokyo, 108-8215 (JP)
(74) Representative: Intès, Didier Gérard André

(56) References cited:
- EP-A1- 1 011 182
- EP-A2- 0 318 839
- DE-A1- 4 445 899
- US-A1- 2009 053 406
- US-A1- 2012 141 277

## Description

### TECHNICAL FIELD

The present disclosure relates to repairing a blade for a wind turbine (wind turbine blade) with lightning protection.

### BACKGROUND

Among damage caused by lightning to a wind turbine power generating facility, damage due to a lightning strike on a wind turbine blade is particularly serious because it leads to longtime shutdown of the facility, for instance.

A conventionally employed configuration for addressing lightning strikes on a wind turbine blade (hereinafter, also referred to as "blade" only) receives electric current at a plurality of receptors (metal lightning receptors) mounted to the surface of the blade, and conducts the lightning current from the lightning strike point to the ground (earth point) through a conductive path (down conductor) connected to the receptors.

For instance, Patent Document 1 (FIGs. 7 to 9 in particular) discloses a configuration in which lightning strikes are received at receptors disposed on blade tips, and then conducted to the earth through conductive wires disposed inside the blades, or mesh bands implanted onto the blades.

Further, Patent Document 2 (FIG. 1 in particular) discloses a wind turbine blade having a lightning-protection system including a metal foil extending continuously along the longitudinal direction from the tip portion to the root portion of the wind turbine blade. Specifically, on the surface of the wind turbine blade, two metal foils are arranged substantially parallel in the blade longitudinal direction, and connected in the transverse direction of the blade with each other via metal foils for connection so as to have the same potential. These metal foils include openings defined by a mesh structure, and serve as down conductors for the lightning current and also as receptors for lightning protection.

When a lightning strike hits the wind turbine blade including the above conductive path, the lightning current flows from the lightning strike point on the wind turbine blade to a nacelle (the wind turbine body), a tower, and the ground in this order through the conductive path having electrical conductivity.

### Citation List

### Patent Literature

Patent Document 1: Japanese Unexamined Patent Application Pub. No. 2004-245174
Patent Document 2: Japanese Unexamined Patent Application (PCT translation) Pub. No. 2014-501864
US 2012/141277 A1 discloses an integrated lightning receptor system and a trailing edge noise reducer for a wind turbine rotor blade.
EP1 011 182 A2 discloses a lightning protection apparatus for a longitudinal member.

### SUMMARY

Meanwhile, damage such as a crack and a scratch caused by burning from lightning strikes or aging (hereinafter, also referred to as "damage" only) may be produced on the conductive path. Continuous operation of a blade with decreased lightning protection performance due to such damage may lead to a serious accident.

However, Patent Document 1 and 2 do not disclose any measure for recovering the above described decrease in the lightning protection function caused by damage to the conductive path.

In view of the above issues, an object of at least one embodiment of the present invention is to provide a wind turbine blade capable of securing a lightning protection function of a blade even in the presence of a damaged section on a conductive path (down conductor) having electrical conductivity such as metal, and a method of repairing the same.
(1) A wind turbine blade according to at least one embodiment of the present invention includes: a blade root portion forming a root of the wind turbine blade; a blade tip portion forming a tip of the wind turbine blade; a main mesh extending continuously between the blade tip portion and the blade root portion, the main mesh having conductivity and forming a conductive path for conducting lightning current; a repair mesh disposed on a damaged section of the main mesh which interrupts a flow of the lightning current, the repair mesh including a mesh piece for compensating for the conductive path formed by the main mesh; and an electrical connecting portion for electrically connecting the main mesh and the repair mesh with each other.
   According to the configuration described in the above (1), the repair mesh is placed on the damaged section of the main mesh, which makes it possible to ensure the lightning protection function with the repair mesh regardless of the presence of the damaged section on the main mesh. Further, using the repair mesh makes it possible to repair the damaged section of the main mesh partially without replacing the entire main mesh, which makes it possible to recover the lightning protection function of the blade economically and efficiently.
(2) According to the invention, the electrical connecting portion includes at least solder.
   According to the configuration described in the above (2), it is possible to electrically connect the main mesh and the repair mesh in a suitable way in accordance with the location and condition of the damage, which makes it possible to provide an economic and efficient blade.
(3) According to the invention, the repair mesh is arranged so as to include an overlapping section which overlaps with a region of the main mesh which does not include the damaged section.
   According to the configuration described in the above (3), the main mesh and the repair mesh are electrically connected to each other at the overlapping section, which makes it possible to ensure even more secure electrical connection between the main mesh and the repair mesh. Thus, it is possible to recover the lightning protection function of the blade economically and efficiently.
(4) In some embodiments, in the configuration described in the above (3), the electrical connecting portion includes at least one of at least one linear solder portion arranged along mesh openings of the repair mesh in the overlapping section, or a plurality of dotted solder portions arranged on lines which define the mesh openings in the overlapping section.
   According to the configuration described in the above (4), tension or compression force of a component mainly along a direction of the mesh openings is applied to the linear solder portion or the dotted solder portions, which makes it possible to improve the durability of the repaired section of the blade repaired by the repair mesh.
(5) In some embodiments, in the configuration described in the above (3) or (4), the electrical connecting portion includes at least one of at least one linear solder portion arranged in the overlapping section, or a plurality of dotted solder portions arranged on the lines defining the mesh openings. Further, the at least one linear solder potion or the plurality of dotted solder portions form an acute angle of not greater than 60 degrees with respect to the blade longitudinal direction.
   Generally, when wind acts on a blade, tension stress or compression stress in the blade longitudinal direction is generated on the mesh disposed on the blade.
   In this regard, with the configuration described in the above (5), it is possible to prevent concentration of the tension stress or the compression stress in the blade longitudinal direction on the solder portion (linear solder portion or dotted solder portions), the tension stress or the compression stress being generated due to the wind acting on the blade. In this way, it is possible to improve the durability of a section of the blade repaired by with the repair mesh.
(6) In some embodiments, in the configuration described in the above (5), the at least one linear solder portion or the plurality of dotted solder portions includes a first portion oriented to a first direction forming a first angle which is an acute angle of not greater than 60 degrees with respect to the blade longitudinal direction, and a second portion oriented to a second direction forming a second angle which is an acute angle of not greater than 60 degrees with respect to the blade longitudinal direction, the second portion intersecting with the first portion.
   With the configuration described in the above (6), it is possible to ensure electrical connection between the main mesh and the repair mesh even when an adequate overlapping area is not secured for the overlapping section. Further, since the main mesh and the repair mesh are joined to each other over a larger area via the linear solder portion or the dotter solder portions, the next repair is less likely to be required, which makes it possible to provide an economic and efficient blade.
(7) In some embodiments, in the configuration described in the above (1) to (6), the damaged section of the main mesh is removed, or resin on a surface of the damaged section of the main mesh is ground.
   With the configuration described in the above (7), it is easy to ensure the electrical connection between the main mesh and the repair mesh. Thus, the next repair is less likely to be required, which makes it possible to provide an economic and efficient blade.
(8) In some embodiments, in the configuration described in the above (4) to (6), a total cross-sectional area of a part of the conductive path, the part being formed by the linear solder portion or the dotted solder portions, is close to or larger than a total cross-sectional area of a part of the conductive path in the damaged section at which the flow of the lightning current is interrupted.
   With the configuration described in the above (8), it is possible to reduce the risk of the solder being melted by the increased temperature at the solder portion upon the lightning current flowing through the conductive path.
(9) In some embodiments, in the configuration described in the above (1) to (8), a size of each of mesh openings of the repair mesh is smaller than a size of each of the mesh openings of the main mesh.
   With the configuration described in the above (9), more than one of the smaller mesh openings of the repair mesh are disposed within each mesh opening of the main mesh. Thus, the main mesh and the repair mesh overlap with each other in a better fashion, which makes it possible to secure the electrical connection between the main mesh and the repair mesh even more effectively.
(10) Further, a method of repairing a wind turbine blade according to at least one embodiment of the present invention is for a wind turbine blade which includes a main mesh extending continuously between a blade tip portion and a blade root portion, the main mesh having conductivity and forming a conductive path for conducting lightning current. The repairing method includes the steps of: placing a repair mesh on a damaged section of the main mesh which interrupts a flow of the lightning current, the repair mesh including a mesh piece for compensating for the conductive path formed by the main mesh; and electrically connecting the repair mesh placed on the damaged section to the main mesh, wherein, in the step of placing the repair mesh, the repair mesh is arranged so as to include an overlapping section which overlaps with a region of the main mesh which does not include the damaged section, and wherein, in the step of electrically connecting the repair mesh, the main mesh and the overlapping section are electrically connected with each other.
   With the method described in the above (10), the repair mesh including the mesh piece is placed on the damaged section of the main mesh extending from the root to the tip of the blade, which makes it possible to ensure the lightning protection function with the repair mesh regardless of the presence of the damaged section on the main mesh. Further, using the repair mesh makes it possible to repair the damaged section of the main mesh partially without replacing the entire main mesh, which makes it possible to recover the lightning protection function of the blade economically and efficiently.
(11) In the method according to the invention, the main mesh and the overlapping section are electrically connected with each other via an electrical connecting portion including at least solder.
   With the method described in the above (11), it is possible to electrically connect the main mesh and the repair mesh in a suitable way in accordance with the location and condition of the damage, which makes it possible to provide an economic and efficient method of repairing a wind turbine blade.
(12) In some embodiments, the method according to the above (10) or (11) further includes the step of cleaning a region of the main mesh on which the electrical connecting portion is configured to be disposed, after removing the damaged section of the main mesh or removing resin on a surface of the damaged section.
   With the method described in the above (12), it is possible to electrically connect the main mesh and the repair mesh even more securely.
(13) In some embodiments, in the method described in the above (11) or (12), in the step of electrically connecting the repair mesh, the solder is applied between the main mesh and the repair mesh so that the main mesh and the repair mesh are electrically connected to each other via the solder.
   With the method described in the above (13), it is possible to electrically connect the main mesh and the repair mesh even more securely by applying the solder between the main mesh and the repair mesh.
(14) In some embodiments, in the method described in the above (11) to (13), the step of electrically connecting the repair mesh includes at least one of applying at least one linear solder portion having a predetermined width along mesh openings of the repair mesh, or applying a plurality of dotted solder portions on lines defining the mesh openings.
   With the method described in the above (14), it is possible to avoid stress concentration on the solder portion (linear solder portion and dotted solder portion) when the blade receives wind and produces tension and compression force in the blade longitudinal direction which transmits to the meshes so as to cause the stresses on the meshes (main mesh and repair mesh) after repair. As a result, it is possible to provide an economic and efficient method of repairing a blade having excellent durability against occurrence of damage to the solder caused by the above stresses applied to the meshes.
(15) In some embodiments, the method described in the above (10) to (14) includes the steps of: obtaining in advance pre-repair information which indicates conductivity of the conductive path between the blade tip portion and the blade root portion before the damaged section is produced; obtaining post-repair information which indicates conductivity of the conductive path between the blade tip portion and the blade root portion after the step of electrically connecting the repair mesh; and evaluating validity of a repair carried out on the main mesh with the repair mesh, on the basis of a comparison result between the pre-repair information and the post-repair information.
   With the method described in the above (15), it is possible to avoid carrying out the next repair again after a repair by confirming the function of the conductive path after the repair, which makes it possible to provide an economic and efficient method of repairing a blade.

According to at least one embodiment of the present invention, it is possible to ensure the lightning protection function of the blade by use of the repair mesh regardless of the presence of the damaged section of the main mesh.

### BRIEF DESCRIPTION OF DRAWINGS

FIG. 1 is a schematic diagram of a wind turbine blade having a main mesh according to one embodiment of the present invention.
FIG. 2 is a schematic diagram of a repair mesh being disposed, via an electrical connecting portion, on a damaged section of the main mesh according to one embodiment of the present invention.
FIG. 3A is a schematic diagram of an overlapping section according to one embodiment of the present invention.
FIG. 3B is a schematic diagram of a repair mesh which divides the main mesh in the blade longitudinal direction, according to one embodiment of the present invention.
FIG. 3C is a schematic diagram of a repair mesh having a parallelogram shape and dividing the main mesh in the blade longitudinal direction, according to one embodiment of the present invention.
FIG. 4A is a schematic diagram of a linear solder portion extending along the mesh openings of the repair mesh according to one embodiment of the present invention.
FIG. 4B is a schematic diagram of a zigzag shape formed from a plurality of linear solder portions according to one embodiment of the present invention.
FIG. 4C is a schematic diagram of a linear solder portion which does not extend along the mesh openings according to one embodiment of the present invention.
FIG. 5 is a schematic diagram of dotted solder portions according to one embodiment of the present invention.
FIG. 6 is a schematic diagram of a repair flow according to one embodiment of the present invention.

### DETAILED DESCRIPTION

Embodiments of the present invention will now be described with reference to the accompanying drawings. It is intended, however, dimensions, materials, shapes, relative positions and the like of components described in the embodiments or the drawings shall be interpreted as illustrative only and not limitative of the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

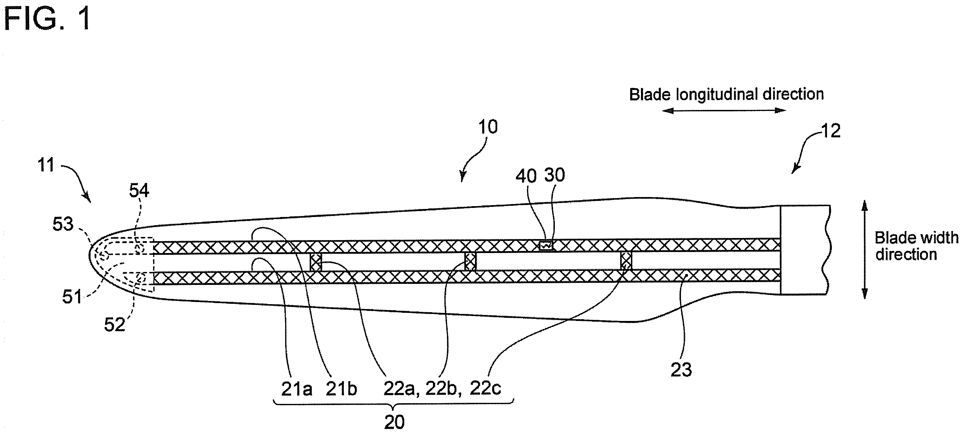

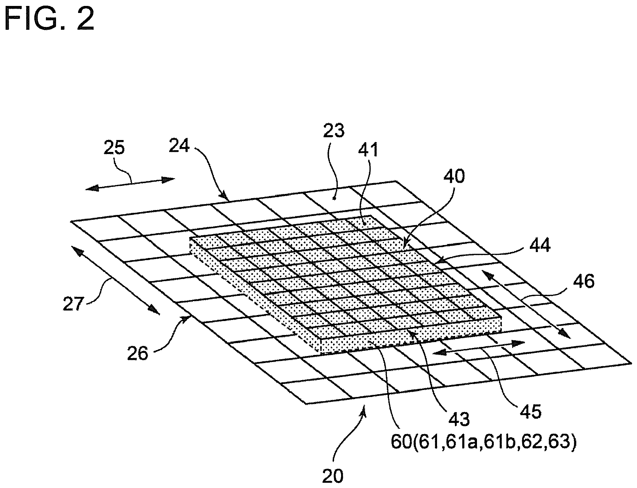

FIG. 1 is a schematic diagram of a wind turbine blade 10 having a main mesh 20 according to one embodiment. FIG. 2 is a schematic diagram of an electrical connecting portion 60 for electrically connecting the main mesh 20 and a repair mesh 40.

In some embodiments, as illustrated in FIG. 1, the wind turbine blade 10 includes a blade tip portion 11 and a blade root portion 12, and extends along the blade longitudinal direction between the blade tip portion 11 and the blade root portion 12. Further, the wind turbine blade 10 includes a main mesh 20 extending continuously between the blade tip portion 11 and the blade root portion 12, the main mesh 20 forming a conducting path for lightning current on the wind turbine blade 10. Still further, the wind turbine blade 10 includes a repair mesh 40 placed on a damaged section 30 of the main mesh 20 which interrupts the flow of the lightning current. The repair mesh 40 and the main mesh 20 are electrically connected to each other via an electrical connecting portion 60.

The configuration will be described below in detail for each of the main mesh 20, the repair mesh 40, and the electrical connecting portion 60.

### (Main mesh 20)

In some embodiments, the main mesh 20 is disposed on the outmost layer of the wind turbine blade 10 or in the vicinity of the same. In this way, it is possible to protect the internal structure of the wind turbine blade 10 of a layer under the main mesh 20 from direct strikes of lightning.

In a case where the main mesh 20 is disposed on the outmost layer of the wind turbine blade 10, the main mesh 20 disposed on top of an outer skin of the wind turbine blade 10 may form the outmost layer of the wind turbine blade 10, for instance. On the other hand, in a case where the main mesh 20 is disposed in the vicinity of the outmost layer of the wind turbine blade 10, the main mesh 20 disposed on top of the outer skin of the wind turbine blade 10 may be covered by a protective layer which forms the outmost layer of the wind turbine blade 10.

Furthermore, the main mesh 20 may be arranged so as to cover a reinforcement member (spar cap) of the wind turbine blade 10. In one embodiment, where a reinforcement member (spar cap) of the wind turbine blade 10 is formed from a conductive composite material (CFRP, for example) and disposed so as to extend along the blade longitudinal direction, the main mesh 20 is arranged along the blade longitudinal direction so as to cover the reinforcement member for the purpose of protecting the reinforcement member from lightning strikes.

When the wind turbine blade 10 is hit by lightning on a lightning strike point, the lightning current flows from the lightning strike point on the wind turbine blade 10 via the main mesh 20 to a nacelle, a tower, and the ground on the blade root portion 12 side, which are all not illustrated, in this order, for instance. The lightning strike point may be a conductive receptor, or the main mesh 20 having conductivity.

In some embodiments, as illustrated in FIG. 1, the main mesh 20 includes at least one first main mesh (21a, 21b) arranged adjacently so as to extend along the blade longitudinal direction.

In one embodiment, as illustrated in FIG. 1, the main mesh 20 includes a plurality of the first main meshes (21a, 21b) and at least one second main mesh (22a, 22b, 22c) which connects the first main meshes (21a, 21b) to each another. In this case, the first main mesh (21a, 21b) and the second main mesh (22a, 22b, 22c) constituting the main mesh 20 form a conductive path for conducting lightning current between the blade tip portion 11 and the blade root portion 12. Here, provision of the second main mesh (22a, 22b, 22c) is optional. There may be no second mesh provided, and the plurality of the first main meshes (21a, 21b) may be electrically separated from each other.

In an exemplary embodiment illustrated in FIG. 1, the main mesh 20 includes two first main meshes 21a, 21b and three second main meshes 22a, 22b, 22c that connect the two first main meshes 21a, 21b with each other. The three second main meshes 22a, 22b, 22c extending in the blade width direction are arranged at substantially equal intervals in the blade longitudinal direction, being used to maintain the above two first main meshes 21a, 21b extending along the blade longitudinal direction at the same electric potential.

In an exemplary embodiment illustrated in FIG. 1, the main mesh 20 is electrically connected to at least one receptor for capturing lightning strikes disposed on the blade tip portion 11. The at least one receptor is three metal receptors 52, 53, 54 in the exemplary embodiment of FIG. 1. Further, the at least one receptor (52, 53, 54) may be attached to a base plate 51 disposed on the blade tip portion 11.

The main mesh 20 illustrated in FIG. 1 may be disposed on one of a pressure surface or a suction surface of the wind turbine blade 10, or on both of the pressure surface and the suction surface.

The main mesh 20 includes a plurality of mesh openings 23 defined by the net-like (mesh) structure of the main mesh 20.

In some embodiments, the main mesh 20 includes a plurality of third lines 24 extending along the third direction 25, and a plurality of fourth lines 26 extending along the fourth direction 27 intersecting the third direction 25. The mesh openings 23 are defined by openings that are surrounded by the third lines 24 and the fourth lines 26 (see FIG. 2). In this case, the mesh openings 23 may have a slant orientation with respect to the blade longitudinal direction as a result of the intersection of the blade longitudinal direction with both of the third lines 24 and the fourth lines 26 forming the mesh openings 23.

The positions and number of the first main meshes 21a, 21b and the second main meshes 22a, 22b, 22c are optional. Further, it will be understood that the skilled in the art can optionally set the shape and size of the mesh openings 23 of the main mesh 20. Further, the third direction 25 and the fourth direction 27 only need to intersect with each other, and the angle formed between the two directions is not limited to the right angle and may be any angle.

### (Repair mesh 40)

A damaged section 30 may be produced on the main mesh 20 due to lightning strikes or deterioration caused by aging. The repair mesh 40 is provided for the damaged section 30, at which the main mesh 20 is damaged, in such a case.

The repair mesh 40 includes a mesh piece which compensates for the conductive path formed by the main mesh 20. The repair mesh 40 includes mesh openings 41 defined by the net-like (mesh) structure, the mesh openings 41 being arranged in a plurality of rows and columns.

In an exemplary embodiment illustrated in FIG. 2, the repair mesh 40 includes a plurality of first lines 43 extending along the first direction 45 and a plurality of second lines 44 extending along the second direction 46. The second direction 46 intersects with the first direction 45. The mesh openings 41 are defined by openings that are surrounded by the first lines 43 and the second lines 44.

The first direction 45 and the second direction 46 only need to intersect with each other, and the angle formed between the two directions is not limited to the right angle and may be any angle.

In some embodiments, the size of each mesh opening 41 of the repair mesh 40 is smaller than the size of each mesh opening 23 of the main mesh 20. With the mesh openings 41 of the repair mesh 40 being smaller than the mesh openings 23 of the main mesh 20, it is possible to ensure better connection between the main mesh 20 and the repair mesh 40. For instance, in a case where the electrical connecting portion 60 includes a solder, it is possible to ensure electrical connection and fixation. That is, a plurality of the mesh openings 41 of the repair mesh 40 overlap with one of the mesh openings 23 of the main mesh 20, thereby improving the flow of the solder, for instance. Similarly, in a non-claimed case where the electrical connecting portion 60 includes a conductive adhesive agent or a conductive tape, it is also possible to have a larger connection area so that it is possible to ensure better electrical connection and fixation.

The shape of the mesh openings 41 of the repair mesh 40 may be such that it is capable of reducing the stress generated on the repair mesh 40 by deforming in accordance with the stress. The stress is generated by the wind received at the wind turbine blade for power generation and applied to the repair mesh 40, for instance. In the exemplary embodiment illustrated in FIG. 2, the mesh openings 41 of the repair mesh 40 each have a substantially rhombic shape. In another embodiment, the mesh openings 41 include shapes such as a semi-ellipse shape, a semicircle shape, and a wavy shape. Further, in yet another embodiment, each mesh opening 41 is a quadrilateral such as a square, and the repair mesh 40 is disposed on the main mesh 20 so that the two diagonal lines of each mesh opening 41 are oriented to the blade longitudinal direction and the blade width direction, respectively.

Further, in some embodiments, the repair mesh 40 may include an overlapping section 70 in at least one section of the repair mesh 40, the overlapping section 70 being a region which overlaps with a region of the main mesh 20 which does not include the damaged section 30.

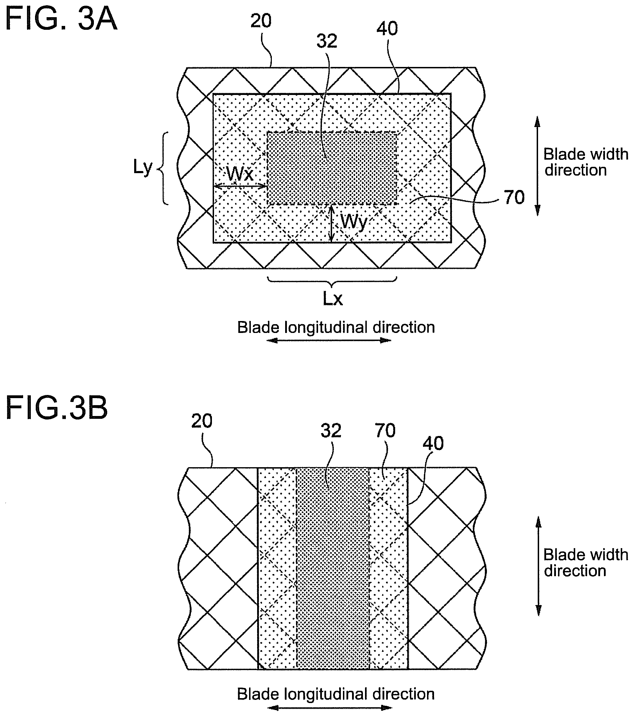

In the embodiments illustrated in FIGs. 3A to 3C, the repair mesh 40 includes the overlapping section 70, in addition to a region 32 of the repair mesh 40 which overlaps with the damaged section 30 of the main mesh 20. Further, as illustrated in FIG. 3A, the width Wx of the overlapping section 70 in the blade longitudinal direction may be 10% to 30% of the length Lx of the damaged section 30 in the blade longitudinal direction. When the width Wx is smaller than 10%, it may be difficult to provide a sufficient area for the electrical connecting portion 60. On the other hand, when the width Wx is larger than 30%, the size of the repair mesh 40 may affect the repair works. For similar reasons, the width Wy of the overlapping section 70 in the blade width direction may be 10% to 30% of the length Ly of the damaged section 30 in the blade width direction.

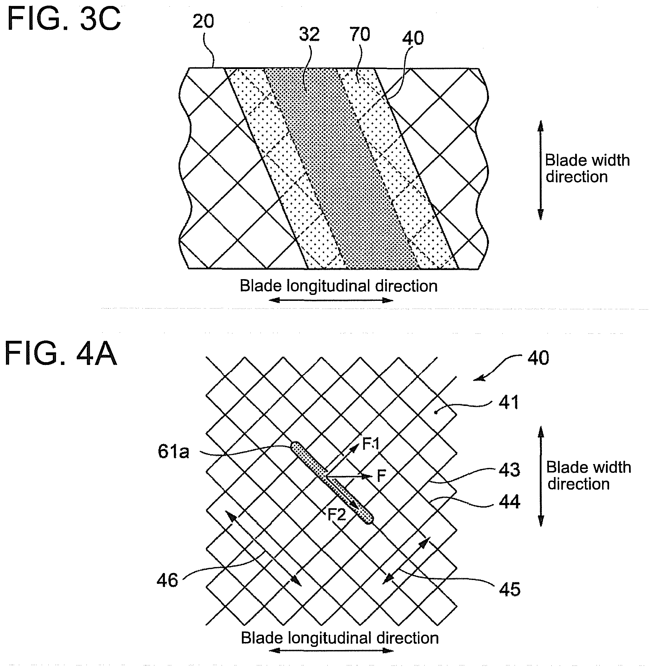

In the exemplary embodiment illustrated in FIGs. 1 and 2, the shape of the repair mesh 40 is a quadrilateral. In another embodiment, the repair mesh 40 is not particularly limited in the shape or the size as long as the repair mesh 40 is capable of covering the damaged section. Thus, the shape and size of the repair mesh 40 are optional, including a parallelogram, a polygon with three or more vertices, a circle and an ellipse. For instance, the repair mesh 40 may have such a size that the repair mesh 40 divides the main mesh 20 (the first main mesh 21b in the example of FIG. 1) in the blade longitudinal direction (see FIGs. 3B and 3C). For instance, this size is a length Ly that is equal to or greater than the entire width, in the blade width direction, of the main mesh 20.

Further, while the single repair mesh 40 covers the single damaged section 30 in the exemplary embodiment illustrated in FIG. 1, the size of the repair mesh 40 may be set such that the single repair mesh 40 covers more than one damaged section 30 produced on more than one location in another embodiment.

### (Electrical connecting portion 60)

In some embodiments, as described above, the electrical connecting portion 60 electrically connects the main mesh 20 and the repair mesh 40 with each other and fixes the same to each other. In some embodiments, as illustrated in FIG. 2, the electrical connecting portion 60 is arranged between the main mesh 20 and the repair mesh 40. In this way, the main mesh 20, the electrical connecting portion 60, and the repair mesh 40 form a conductive path which runs through the repair mesh 40 via the electrical connecting portion 60 and bypasses the damaged section 30 of the main mesh 20.

Further, the electrical connecting portion 60 may be disposed in any region as long as the electrical connection and fixation of the main mesh 20 to the repair mesh 40 can be achieved. For instance, as in the embodiment of FIG. 2, the electrical connecting portion 60 may be disposed over the entire region corresponding to the repair mesh 40. In another embodiment, the electrical connecting portion 60 is disposed over only a part of the region corresponding to the repair mesh 40. In this case, the electrical connecting portion 60 may be disposed in a region that corresponds to at least a part of the overlapping section 70, between the main mesh 20 and the overlapping section 70 of the repair mesh 40.

Further, the electrical connecting portion 60 includes at least solder portion 61 (a linear solder portion 61a, dotted solder portions 61b), and, in a non-claimed embodiment, may include at least a conductive adhesive agent 62, or a conductive tape 63. The configuration will be described below in detail for each type of the electrical connecting portion 60.

### (Electrical connecting portion 60 including a solder portion 61)

In the invention, the electrical connecting portion 60 includes solder (a solder portion 61).

### (Electrical connecting portion 60 including a linear solder portion 61a)

In some embodiments, as illustrated in FIGs. 4A to 4B, the electrical connecting portion 60 including a solder portion 61 includes at least one linear solder portion 61a arranged in a linear fashion along the mesh openings 41 of the repair mesh 40.

In the embodiment illustrated in FIG. 4A, the repair mesh 40 includes a plurality of first lines 43 arranged in a direction (the first direction 45) of 45 degrees with respect to the blade longitudinal direction, and a plurality of second lines 44 arranged in a direction (the second direction 46) of 135 degrees with respect to the blade longitudinal direction, or 45 degrees in the acute angle. The second lines 44 are arranged so as to intersect with the first lines 43.

In a case where the repair mesh 40 has such a configuration, the linear solder portion 61a is disposed so as to extend in the same direction as the direction of the second lines 44 in the embodiment of FIG. 4A. The above linear solder portion 61a electrically connects and fixes the main mesh 20 and the repair mesh 40 with each other.

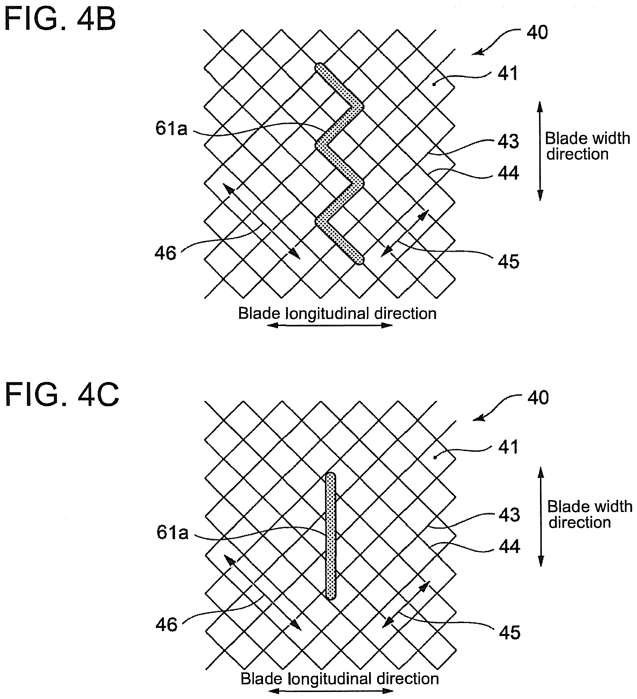

In some embodiments, as illustrated in FIG. 4B, the linear solder portion 61a may be disposed in a zigzag fashion along the mesh openings 41 of the repair mesh 40. In other words, a plurality of linear solder portions 61a may be arranged along a line in which the first lines 43 and the second lines 44 of the mesh openings 41 are alternately repeated.

In the embodiment illustrated in FIG. 4B, the repair mesh 40 includes a plurality of first lines 43 having an angle of plus 45 degrees with respect to the blade longitudinal direction and a plurality of second lines 44 having an angle of plus 135 degrees (45 degrees in the acute angle) with respect to the blade longitudinal direction.

When the repair mesh 40 has the above configuration, as in the embodiment illustrated in FIG. 4B, a linear solder portion 61a extending along one of the second lines 44 is connected to another linear solder portion 61a extending along one of the first lines 43. A plurality of linear solder portions 61a includes such lines having different angles repeated alternately, thereby forming a zigzag shape.

The above configuration is advantageous when there is not enough room in the region for forming the linear solder portion 61a, e.g. in a case where the linear solder portion 61a is disposed on the overlapping section 70 but the size of the overlapping section 70 is not sufficient.

Further, the linear solder portion 61a may be arranged in a zigzag shape along the mesh openings 41 of the repair mesh 40 having acute angles of 60 degrees or less, preferably within approximately 45 degrees (for instance, 45 degrees or 0 degree) with respect to the blade longitudinal direction.

When the solder is applied along the mesh openings 41 of the repair mesh 40 as described above, the stress (e.g. reference sign F in FIG. 4A) generated due to wind or the like received by the wind turbine blade 10 and applied to the linear solder portion 61a mainly acts in the of the mesh direction components (e.g. F1 and F2 in FIG. 4A). As a result, it is possible to prevent the linear solder portion 61a from being damaged by stress concentration. That is, while the wind turbine generates power utilizing wind power received by the wind turbine blade 10, tension stress or compression stress (especially in the blade longitudinal direction) is caused by e.g. the action of the wind, and then is applied to the repair mesh 40 disposed on the blade. At this time, the linear solder may be damaged if the linear solder is applied independently of the direction of the mesh openings 41 or the blade longitudinal direction, as confirmed in the tests carried out by the present inventors. In the tests, there was a case in which the solder cracked depending on the direction of the mesh openings 41 or the blade longitudinal direction, when a linear solder had been applied in a direction independent of the direction of the mesh openings 41, as illustrated in FIG. 4C for instance, and then repeatedly subjected to loads for a long period of time. Here, FIG. 4C illustrates a direction independent of the direction of the mesh openings 41. In FIG. 4C, the first lines 43 and the second lines 44 both have an acute angle of 45 degrees and the linear solder portion 61a has an angle of 90 degrees with respect to the blade longitudinal direction. If this direction independent of the direction of the mesh openings 41 is to be described disregarding the damage to the solder due to stress concentration, this independent direction may include any angle as long as the direction is not along the first lines 43 or the second lines 44.

Further, in the embodiments illustrated in FIGs. 4A and 4B, the linear solder portion 61a extending along the mesh openings 41 is formed so as to be superposed on the first lines 43 or the second lines 44 of the mesh openings 41. In some other embodiments, at least a part of the linear solder portion 61a may not extend along the mesh openings 41. That is, a predetermined angle between the linear solder portion 61a and the blade longitudinal direction may be different from the angle formed between the blade longitudinal direction and the first lines 43 or the second lines 44 forming the mesh openings 41. For instance, when the acute angles formed between the blade longitudinal direction and the first lines 43 and the second lines 44 of the mesh openings 41are 60 degrees, the acute angle between the linear solder portion 61a and the blade longitudinal direction may be 45 degrees. As described above, the acute angle between the linear solder portion 61a and the blade longitudinal direction may be not more than 60 degrees, e.g. not less than 40 degrees and not more than 60 degrees.

Similarly, it is unnecessary for each linear solder portion 61a to have an identical acute angle in the case of the zigzag shape, unlike the embodiment illustrated in FIG. 4B. For instance, the zigzag shape may be formed by alternately repeating linear solder portions 61a having angles of plus 45 degrees and plus 0 degrees. Also, all linear solder portions 61a may have different angles. In this case, it is desirable for each linear solder portion 61a to have an acute angle of 60 degrees or less with respect to the blade longitudinal direction, and preferably, the acute angle is approximately 45 degrees or zero degree.

In FIGs. 4A and 4B, at least one of the linear solder portions 61a is superposed on one of the second lines 44. In some other embodiments, at least one of the solder portions 61a is superposed on more than one of the second lines 44. In other words, the linear solder portion 61a has a width of a certain extent and bridges over more than one of the second lines 44. In one example, the width of the linear solder portion 61a is within a range of approximately from 2 to 6mm, and preferably, from 3 to 5mm.

It will be understood that the linear solder portion 61a may have any length.

As described above, with the linear solder portion 61a disposed along the direction of the mesh openings 41 of the repair mesh 40, stress load applied to the linear solder portion 61a is reduced, which makes it possible to achieve the effect of improving the lifetime of the repaired position (repaired section).

### (Electrical connecting portion 60 including the dotted solder portions 61b)

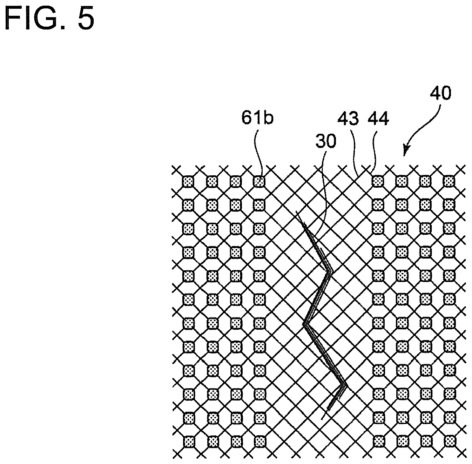

In some embodiments, as illustrated in FIG. 5, the electrical connecting portion 60 including the solder portion 61 includes the dotted solder portions 61b formed by arranging solder in a dotted fashion. The main mesh 20 and the repair mesh 40 are electrically connected and fixed with each other via the plurality of dotted solder portions 61b.

In the embodiment illustrated in FIG. 5, the plurality of dotted solder portions 61b creates a pattern in which the dotted solder portions 61b are regularly applied in the blade longitudinal direction and the blade width direction on either side of the damaged section 30 in the blade longitudinal direction, thereby constituting the electrical connecting portion 60.

In FIG. 5, each dotted solder portion 61b is arranged so as to be superposed on an intersection of one of the first lines 43 and one of the second lines 44. In some other embodiments, each dotted solder portion 61b is superposed on a plurality of such intersections. In other words, each dotted solder portion 61b has a width of a certain extent, approximately within a range of 2 to 6mm in diameter in an example, or preferably 3 to 5mm. Alternatively, each dotted solder portion 61b may be arranged off the intersections.

With the above configuration of the dotted solder portions 61b, the plurality of dotted solder portions 61b establish connection at more than one location, so that it is possible to distribute the above stress applied to the solder dispersedly over the plurality of dotted solder portions 61b. Thus, the stress load applied to each dotted solder portion 61b is reduced, which makes it possible to achieve a lifetime-improving effect for the repaired location. It will be understood that the pattern of the dotter solder in FIG. 5 is merely an example and that any pattern may be employed as long as the dotted solder portions 61b are scattered in a dotted fashion.

In some embodiments, a total area of the conductive path formed by the solder portion 61 including the linear solder portion 61a or the dotted solder portions 61b is set on the basis of a predictive value of temperature increase caused upon conduction of lightning current, and the solder is applied so as to secure the set total area. The purpose here is to reduce the risk of the solder being melted by heat (Joule heat) produced by lightning current which flows between the main mesh 20 and the repair mesh 40 through the electrical connecting portion 60 in the event of a lightning strike.

In one example, the risk that the solder melts is predicted to arise when a total cross-sectional area of the electric conductive path formed by the solder portion 61 is smaller than a total cross-sectional area of the conductive path prior to occurrence of the damage on the damaged section 30 of the main mesh 20. Thus, the solder-applied area is secured so that the cross-sectional areas in the above two cases have similar values. Also, the solder-applied area may be secured so that the total cross-sectional area of the conductive path formed by the solder portion 61 is larger than the total cross-sectional area of the conductive path before occurrence of the damage on the damaged section 30.

With the above configuration, it is possible to reduce the risk that the solder portion 61 melts due to the temperature increase when lightning current flows in the event of a lightning strike. Further, in consequence, it is possible to achieve the lifetime-improving effect for the repaired location (repaired section).

(Electrical connecting portion 60 including a conductive adhesive agent 62) In some non-claimed embodiments, the electrical connecting portion 60 includes a conductive adhesive agent 62. The conductive adhesive agent 62 is an adhesive agent to which electric conductivity is applied. In one example, conductive fillers (particles of silver or the like) are mixed into an adhesive agent such as resin, thereby forming paths through which electric current flows among the fillers in the resin, so that the adhesive agent has electrical conductivity. The conductive adhesive agent 62 carries out electrical connection and adhesive fixation. It is also possible to achieve strength against fatigue because the adhesive agent includes resin and thus has elasticity.

In some non-claimed embodiments, as illustrated in FIG. 2 as the electrical connecting portion 60, the conductive adhesive agent 62 is arranged between the repair mesh 40 and the main mesh 20 and then hardened, thereby constituting the electrical connecting portion 60.

In some non-claimed embodiments, the conductive adhesive agent 62 may be arranged in a sheet shape. In one example, as illustrated in FIG. 2 as the electrical connecting portion 60, the conductive adhesive agent 62 is arranged (applied) so as to cover the entire region of a surface of the repair mesh 40 which faces the main mesh 20. With the conductive adhesive agent 62 being arranged in a sheet shape, more conductive paths are formed permitting lightning current to flow through, which makes it possible to obtain a larger conductive area.

Further, the thickness of the conductive adhesive agent 62 may be reduced as long as an adhesive effect is still obtainable from the reduced thickness. Reducing the thickness improves conductive performance.

With the above non-claimed including the electrical connecting portion 60 having the conductive adhesive agent 62, it is possible to achieve conductivity with high performance and to achieve the lifetime-improving effect for the repaired location (repaired section) thanks to the elasticity based on the adhesive agent such as resin. Further, it is possible to achieve another effect of the conductive adhesive agent 62 that simplifies the repair works.

### (Electrical connecting portion 60 including a conductive tape 63)

In some non-claimed embodiments, the electrical connecting portion 60 includes a conductive tape 63. A conductive tape is a tape into which conductive particles are mixed.

In some non-claimed embodiments, when the main mesh 20 and the repair mesh 40 are connected to each other via the conductive tape 63 as illustrated in FIG. 2 as the electrical connecting portion 60, the conductive tape 63 fixes the main mesh 20 and the repair mesh 40 and also electrically connects the main mesh 20 and the repair mesh 40 by the adhesive force of both surfaces of the conductive tape 63. Similarly to the case of the conductive adhesive agent 62, it is possible to achieve conductivity with high performance and elasticity with the conductive tape 63.

In addition to the above, when the repair mesh 40 is disposed on the main mesh 20 along with the conductive tape 63, it is possible to fix the repair mesh 40 and the main mesh 20 with the conductive tape 63 without taking any further action. Thus, when carry out repair works on a site where the wind turbine is installed, the workability is particularly enhanced. For instance, it is unnecessary to control the time for hardening the applied part of an adhesive agent, unlike the case of the adhesive agent. Thus, it is also possible to save the work hours and effort.

Next, a repair work in a case where the main mesh 20 is damaged by a lightning strike or deterioration due to aging will be described.

As described above, the damaged section 30 of the main mesh 20 is repaired by placing the repair mesh 40 on the main mesh 20 so as to cover at least a part of the damaged section 30 of the main mesh 20. Further, upon placing the repair mesh 40, the electrical connecting portion 60 for electrical connection and fixation between the main mesh 20 and the repair mesh 40 is formed.

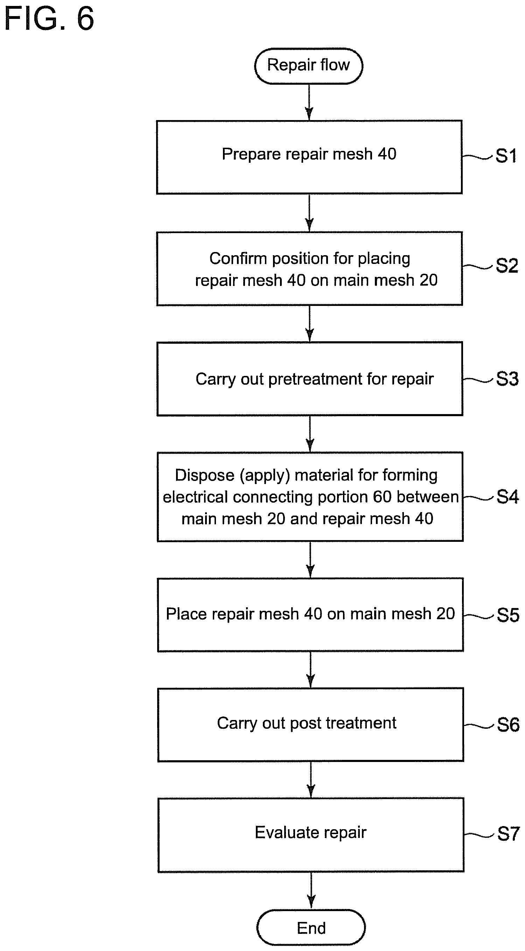

The repair flow according to some embodiments will be described below (see FIG. 6).

In step S1, the repair mesh 40 is prepared in a size that corresponds to the damaged section 30. For example, the prepared repair mesh 40 is an expanded copper foil patch (ECF). At this time, the repair mesh 40 may include the overlapping section 70 forming a region which overlapping with a region of the mesh 20 that does not include the damaged section 30, in addition to the region 32 which overlaps with the damaged section 30 of the main mesh 20 (see FIGs. 3A to 3C).

In step S2, a position on the main mesh 20 for placing the repair mesh 40 may be confirmed in advance. Also, the position on the main mesh 20 for placing the repair mesh 40 may be marked by a line or the like (marking).

In step S3, a pretreatment for the repair work using the repair mesh 40 may be carried out.

As a pretreatment, the damaged section 30 may be removed by, for instance, grinding or cutting out the damaged portion of the conductive path where the damaged section 30 has melted and become dark, interrupting the conductivity. Further, as a pretreatment, an optional technique such as polishing may be used to remove resin or the like that forms the top skin layer of the blade over a region of the main mesh 20 around the damaged section 30. Still further, as a pretreatment, at least a part of the pretreated portion may be cleaned by acetone or the like.

Furthermore, the repair mesh 40 may also undergo a pretreatment such as the above polishing and cleaning if needed to provide electrical connection. The main mesh 20 does not need to be compensated for its removed portion because the repair mesh 40 forms a conductive path for conducting lightning current.

Further, the wind turbine blade 10 may also undergo the pretreatment. For instance, when the damage has reached a portion of the blade formed of GFRP or CFRP, the damaged portion may be removed including the surrounding region required for the repair work. Then, the damaged GFRP or CFRP may be layered again (the hand lay-up method), and the re-layered surface may be polished to smooth the surface.

In step S4, a member (material) such as in the invention the solder portion 61 (linear solder portion 61a, dotted solder portions 61b), or such as in non-claimed embodiments the adhesive agent 62, and the conductive tape 63 forming the electrical connecting portion 60 is disposed (applied) between the main mesh 20 and the repair mesh 40. When forming the electrical connecting portion 60 including the solder portion 61, at least one of the main mesh 20 or the repair mesh 40 may be soldered temporarily.

In step S5, the repair mesh 40 is placed on the main mesh 20. The repair mesh 40 may be placed along the above described marking. When the electrical connecting portion 60 includes the solder portion 61, connection between the main mesh 20 and the repair mesh 40 may be further reinforced by heating and melting the temporarily applied solder, making the solder flow into the mesh, and/or forcing the repair mesh 40 and the main mesh 20 against each other.

In step S6, a post treatment may be carried out for the electrical connecting portion 60 if needed. As a post treatment, the solder portion 61 may be flattened by an optional technique such as polishing so that the level of solder portion 61 becomes closer to that of the repair mesh 40.

In step S7, the repair work may be evaluated. In some embodiments, the repair work is evaluated on the basis of information indicating the conductivity of the conductive path formed by the main mesh 20, the repair mesh 40, and the electrical connecting portion 60 before and after the repair work (pre-repair information post-repair information).

Information used for the evaluation may include not only the conductivity of the conductive path itself, but also optional information indicating the conductivity of the conductive path, such as any information capable of evaluating the function of the conductive path for conducting lightning current such as the resistance value, current value, or voltage of the conductive path. Further, upon acquisition of the pre-repair and post-repair information such as the conductivity, the measurement may be carried out on the entire blade e.g. between the blade tip portion 11 and the blade root portion 12. For instance, the measurement may be carried out between a receptor of the blade tip portion 11 and a connection plate that connects the blade root portion 12 of the main mesh 20 to a member on the nacelle side.

Then, validity of the repair work is determined by comparing a comparison result of a deviation or the like between the pre-repair information and the post-repair information to predetermined criteria. The pre-repair information is obtained in advance before occurrence of the damaged section 30, which is as before attachment of a discharge ring, for instance.

The present invention is not limited to the above embodiments, and includes modified embodiments and combinations of the above embodiments.

For instance, the electrical connecting portion 60 may include a combination of the dotted solder portions 61b and the linear solder portion 61a. In a non-claimed embodiment, the electrical connecting portion 60 may include a combination of the conductive adhesive agent 62 and the conductive tape 63.

## Claims

1. A wind turbine blade (10) comprising:
a blade root portion (12) forming a root of the wind turbine blade;
a blade tip portion (11) forming a tip of the wind turbine blade;
a main mesh (20) extending continuously between the blade tip portion (11) and the blade root portion (12), the main mesh having conductivity and forming a conductive path for conducting lightning current;
a repair mesh (40) disposed on a damaged section (30) of the main mesh (20) which interrupts a flow of the lightning current, the repair mesh including a mesh piece for compensating for the conductive path formed by the main mesh (20); and
an electrical connecting portion (60) for electrically connecting the main mesh and the repair mesh with each other, **characterized in that**
the repair mesh (40) is arranged so as to include an overlapping section (70) which overlaps with a region of the main mesh (20) which does not include the damaged section (30), and
the electrical connecting portion (60) includes at least solder (61) and is configured to electrically connect the main mesh (20) and the overlapping section (70) with each other.

2. The wind turbine blade according to claim 1,
wherein the electrical connecting portion (60) is disposed in a region that corresponds to at least a part of the overlapping section (70), between the main mesh (20) and the overlapping section (70) of the repair mesh (40).

3. The wind turbine blade according to claim 1 or 2,
wherein the electrical connecting portion (60) includes at least one of at least one linear solder portion (61a) arranged along mesh openings (41) of the repair mesh (40) in the overlapping section (70), or a plurality of dotted solder portions (61b) arranged on lines (43, 44) which define the mesh openings (41) in the overlapping section (70).

4. The wind turbine blade according to any one of claims 1 to 3,
wherein the electrical connecting portion (60) includes at least one of at least one linear solder portion (61a) arranged in the overlapping section (70), or a plurality of dotted solder portions (61b) arranged on the lines (43, 44) defining the mesh openings (41), and
wherein the at least one linear solder potion or the plurality of dotted solder portions (61b) form an acute angle of not greater than 60 degrees with respect to the blade longitudinal direction.

5. The wind turbine blade according to claim 4,
wherein the at least one linear solder portion (61a) or the plurality of dotted solder portions (61b) includes a first portion oriented to a first direction (45) forming a first angle which is an acute angle of not greater than 60 degrees with respect to the blade longitudinal direction, and a second portion oriented to a second direction (46) forming a second angle which is an acute angle of not greater than 60 degrees with respect to the blade longitudinal direction, the second portion intersecting with the first portion.

6. The wind turbine blade according to any one of claims 3 to 5,
wherein a total cross-sectional area of a part of the conductive path, the part being formed by the linear solder portion (61a) or the dotted solder portions (61b), is close to or larger than a total cross-sectional area of a part of the conductive path in the damaged section at which the flow of the lightning current is interrupted.

7. The wind turbine blade according to any one of claims 1 to 6,
wherein a size of each of mesh openings (41) of the repair mesh (40) is smaller than a size of each of the mesh openings (23) of the main mesh (20).

8. A method of repairing a wind turbine blade (10) which includes a main mesh (20) extending continuously between a blade tip portion (11) and a blade root portion (12), the main mesh (20) having conductivity and forming a conductive path for conducting lightning current, the method comprising the steps of:
placing a repair mesh (40) on a damaged section (30) of the main mesh (20) which interrupts a flow of the lightning current, the repair mesh (40) including a mesh piece for compensating for the conductive path formed by the main mesh (20); and
electrically connecting the repair mesh (40) placed on the damaged section to the main mesh (20), the method being **characterized in that**,
in the step of placing the repair mesh (40), the repair mesh (40) is arranged so as to include an overlapping section (70) which overlaps with a region of the main mesh (20) which does not include the damaged section (30), and
in the step of electrically connecting the repair mesh (40), the main mesh (20) and the overlapping section (70) are electrically connected with each other via an electrical connecting portion (60) including at least solder (61).

9. The method of repairing a wind turbine blade according to claim 8, further comprising the step (53) of cleaning a region of the main mesh (20) on which the electrical connecting portion is configured to be disposed, after removing the damaged section of the main mesh (20) or removing resin on a surface of the damaged section.

10. The method of repairing a wind turbine blade according to claim 8 or 9,
wherein, in the step of electrically connecting the repair mesh, the solder (61) is applied between the main mesh (20) and the repair mesh (40) so that the main mesh and the repair mesh are electrically connected to each other via the solder (61).

11. The method of repairing a wind turbine blade according to any one of claims 8 to 10,
wherein the step of electrically connecting the repair mesh (40) includes at least one of applying at least one linear solder portion (61a) having a predetermined width along mesh openings (41) of the repair mesh (40), or applying a plurality of dotted solder portions (61b) arranged on lines (43, 44) which define the mesh openings.

12. The method of repairing a wind turbine blade according to any one of claims 8 to 11, further comprising the steps of:
obtaining in advance pre-repair information which indicates conductivity of the conductive path between the blade tip portion (11) and the blade root portion (12) before the damaged section is produced;
obtaining post-repair information which indicates conductivity of the conductive path between the blade tip portion (11) and the blade root portion (12) after the step of electrically connecting the repair mesh (40); and
evaluating validity of a repair carried out on the main mesh (20) with the repair mesh (40), on the basis of a comparison result between the pre-repair information and the post-repair information.

## Patentansprüche

1. Windturbinenblatt (10), umfassend:
einen Blattwurzelabschnitt (12), der eine Wurzel des Windturbinenblatts bildet,
einen Blattspitzenabschnitt (11), der eine Spitze des Windturbinenblatts bildet,
ein Hauptgewebe (20), das sich kontinuierlich zwischen dem Blattspitzenabschnitt (11) und dem Blattwurzelabschnitt (12) erstreckt, wobei das Hauptgewebe Leitfähigkeit aufweist und eine leitende Bahn zum Leiten von Blitzstrom bildet,
ein Reparaturgewebe (40), das an einem beschädigten Abschnitt (30) des Hauptgewebes (20) angeordnet ist, der einen Fluss des Blitzstroms unterbricht, wobei das Reparaturgewebe ein Gewebestück zum Kompensieren der durch das Hauptgewebe (20) gebildeten leitenden Bahn umfasst, und
einen elektrischen Verbindungsabschnitt (60) zum elektrischen Verbinden des Hauptgewebes und des Reparaturgewebes miteinander, **dadurch gekennzeichnet, dass**
das Reparaturgewebe (40) derart angeordnet ist, dass es einen überlappenden Abschnitt (70) umfasst, der sich mit einem Bereich des Hauptgewebes (20), der nicht den beschädigten Abschnitt (30) umfasst, überlappt, und
der elektrische Verbindungsabschnitt (60) mindestens Lot (61) umfasst und dazu ausgebildet ist, das Hauptgewebe (20) und den überlappenden Abschnitt (70) elektrisch miteinander zu verbinden.

2. Windturbinenblatt nach Anspruch 1,
wobei der elektrische Verbindungsabschnitt (60) in einem Bereich, der mindestens einem Teil des überlappenden Abschnitts (70) entspricht, zwischen dem Hauptgitter (20) und dem überlappenden Abschnitt (70) des Reparaturgitters (40) angeordnet ist.

3. Windturbinenblatt nach Anspruch 1 oder 2,
wobei der elektrische Verbindungsabschnitt (60) mindestens einen umfasst aus der Gruppe umfassend mindestens einen geradlinigen Lotabschnitt (61 a), der entlang Gewebeöffnungen (41) des Reparaturgewebes (40) in dem überlappenden Abschnitt (70) angeordnet ist, und eine Vielzahl von Punktlotabschnitten (61 b), die auf Linien (43, 44), welche die Gewebeöffnungen (41) in den überlappenden Abschnitten (70) definieren, angeordnet sind.

4. Windturbinenblatt nach einem beliebigen der Ansprüche 1 bis 3,
wobei der elektrische Verbindungsabschnitt (60) mindestens einen umfasst aus der Gruppe umfassend mindestens einen geradlinigen Lotabschnitt (61 a), der in dem überlappenden Abschnitt (70) angeordnet ist, und eine Vielzahl von Punktlotabschnitten (61 b), die auf den Linien (43, 44), welche die Gewebeöffnungen (41) definieren, angeordnet sind, und
wobei der mindestens eine geradlinige Lotabschnitt oder die Vielzahl von Punktlotabschnitten (61 b) einen spitzen Winkel von nicht größer als 60 Grad in Bezug auf die Blattlängsrichtung bilden.

5. Windturbinenblatt nach Anspruch 4,
wobei der mindestens eine geradlinige Lotabschnitt (61 a) oder die Vielzahl von Punktlotabschnitten (61 b) einen ersten Abschnitt umfasst, der in eine erste Richtung (45) ausgerichtet ist, die einen ersten Winkel bildet, der ein spitzer Winkel von nicht größer als 60 Grad in Bezug auf die Blattlängsrichtung ist, und einen zweiten Abschnitt umfasst, der in eine zweite Richtung (46) ausgerichtet ist, die einen zweiten Winkel bildet, der ein spitzer Winkel von nicht größer als 60 Grad in Bezug auf die Blattlängsrichtung ist, wobei der zweite Abschnitt und der erste Abschnitt einander kreuzen.

6. Windturbinenblatt nach einem beliebigen der Ansprüche 3 bis 5,
wobei eine Gesamtquerschnittsfläche eines Teils der leitenden Bahn, wobei der Teil durch den geradlinigen Lotabschnitt (61 a) oder die Punktlotabschnitte (61 b) gebildet wird, nahe einer oder größer als eine Gesamtquerschnittsfläche eines Teils der leitenden Bahn in dem beschädigten Abschnitt ist, an dem der Fluss des Blitzstroms unterbrochen wird.

7. Windturbinenblatt nach einem beliebigen der Ansprüche 1 bis 6,
wobei eine Größe von jeder der Gewebeöffnungen (41) des Reparaturgewebes (40) kleiner als eine Größe von jeder der Gewebeöffnungen (23) des Hauptgewebes (20) ist.

8. Verfahren zum Reparieren eines Windturbinenblatts (10), das ein Hauptgewebe (20), das sich kontinuierlich zwischen einem Blattspitzenabschnitt (11) und einem Blattwurzelabschnitt (12) erstreckt, umfasst, wobei das Hauptgewebe (20) Leitfähigkeit aufweist und eine leitende Bahn zum Leiten von Blitzstrom bildet, wobei das Verfahren folgende Schritte umfasst:
Anordnen eines Reparaturgewebes (40) an einem beschädigten Abschnitt (30) des Hauptgewebes (20), der einen Fluss des Blitzstroms unterbricht, wobei das Reparaturgewebe (40) ein Gewebestück zum Kompensieren der durch das Hauptgewebe (20) gebildeten leitenden Bahn umfasst, und
elektrisches Verbinden des Reparaturgewebes (40), das an dem beschädigten Abschnitt angeordnet wird, mit dem Hauptgewebe (20), wobei das Verfahren **dadurch gekennzeichnet ist, dass**,
bei dem Schritt des Anordnens des Reparaturgewebes (40) das Reparaturgewebe (40) derart angeordnet wird, dass es einen überlappenden Abschnitt (70) umfasst, der sich mit einem Bereich des Hauptgewebes (20), der nicht den beschädigten Abschnitt (30) umfasst, überlappt, und
bei dem Schritt des elektrischen Verbindens des Reparaturgewebes (40) das Hauptgewebe (20) und der überlappende Abschnitt (70) über einen elektrischen Verbindungsabschnitt (60), der mindestens Lot (61) umfasst, elektrisch miteinander verbunden werden.

9. Verfahren zum Reparieren eines Windturbinenblatts nach Anspruch 8, ferner umfassend den Schritt (53) des Reinigens eines Bereichs des Hauptgewebes (20), an dem der elektrische Verbindungsabschnitt angeordnet zu werden ausgebildet ist, nach dem Entfernen des beschädigten Abschnitts des Hauptgewebes (20) oder dem Entfernen von Harz auf einer Oberfläche des beschädigten Abschnitts.

10. Verfahren zum Reparieren eines Windturbinenblatts nach Anspruch 8 oder 9,
wobei bei dem Schritt des elektrischen Verbindens des Reparaturgewebes das Lot (61) zwischen dem Hauptgewebe (20) und dem Reparaturgewebe (40) derart aufgebracht wird, dass das Hauptgewebe und das Reparaturgewebe über das Lot (61) elektrisch miteinander verbunden sind.

11. Verfahren zum Reparieren eines Windturbinenblatts nach einem beliebigen der Ansprüche 8 bis 10,
wobei der Schritt des elektrischen Verbindens des Reparaturgewebes (40) mindestens eines umfasst aus der Gruppe umfassend Aufbringen von mindestens einem geradlinigen Lotabschnitt (61 a) mit einer vorgegebenen Breite entlang Gewebeöffnungen (41) des Reparaturgewebes (40) und Aufbringen einer Vielzahl von Punktlotabschnitten (61 b), die auf Linien (43, 44), welche die Gewebeöffnungen definieren, angeordnet sind.

12. Verfahren zum Reparieren eines Windturbinenblatts nach einem beliebigen der Ansprüche 8 bis 11, ferner umfassend folgende Schritte:
Beschaffen von Informationen vor der Reparatur im Voraus, welche die Leitfähigkeit der leitenden Bahn zwischen dem Blattspitzenabschnitt (11) und dem Blattwurzelabschnitt (12) angeben, ehe der beschädigte Abschnitt hergestellt wird,
Beschaffen von Informationen nach der Reparatur, welche die Leitfähigkeit der leitenden Bahn zwischen dem Blattspitzenabschnitt (11) und dem Blattwurzelabschnitt (12) angeben, nach dem Schritt des elektrischen Verbindens des Reparaturgewebes (40), und
Evaluieren der Tauglichkeit einer Reparatur, die mit dem Reparaturgewebe (40) an dem Hauptgewebe (20) durchgeführt wurde, auf der Basis eines Vergleichsergebnisses zwischen den Informationen vor der Reparatur und den Informationen nach der Reparatur.

## Revendications

1. Pale d'éolienne (10) comportant :
une partie de pied de pale (12) formant un pied de la pale d'éolienne ;
une partie de bout de pale (11) formant un bout de la pale d'éolienne ;
une grille principale (20) s'étendant de manière continue entre la partie de bout de pale (11) et la partie de pied de pale (12), la grille principale ayant une conductivité et formant un passage conducteur destiné à conduire du courant de foudre ;
une grille de réparation (40) disposée sur une section endommagée (30) de la grille principale (20) qui interrompt une circulation du courant de foudre, la grille de réparation comprenant une partie de grille destinée à compenser le passage conducteur formé par la grille principale (20) ; et
une partie de raccordement électrique (60) destinée à relier électriquement la grille principale et la grille de réparation l'une avec l'autre, **caractérisée en ce que**
la grille de réparation (40) est prévue de façon à inclure une section de chevauchement (70) qui chevauche une zone de la grille principale (20) qui n'inclue pas la section endommagée (30), et
la partie de raccordement électrique (60) comprend au moins une soudure (61) et est configurée pour relier électriquement la grille principale (20) et la section de chevauchement (70) l'une à l'autre.

2. Pale d'éolienne selon la revendication 1, dans laquelle la partie de raccordement électrique (60) est disposée dans une zone qui correspond au moins à une partie de la section de chevauchement (70), entre la grille principale (20) et la section de chevauchement (70) de la grille de réparation (40).

3. Pale d'éolienne selon la revendication 1 ou 2, dans laquelle la partie de raccordement électrique (60) comprend au moins une d'au moins une partie de soudure linéaire (61a) disposée le long des ouvertures de grille (41) de la grille de réparation (40) dans la section de chevauchement (70), ou d'une pluralité de parties de soudure en pointillés (61b) disposées sur des lignes (43, 44) qui définissent les ouvertures de grille (41) dans la section de chevauchement (70).

4. Pale d'éolienne selon l'une quelconque des revendications 1 à 3, dans laquelle la partie de raccordement électrique (60) comprend au moins une parmi au moins une partie de soudure linéaire (61a) disposée dans la section de chevauchement (70), ou parmi une pluralité de parties de soudure en pointillés (61b) disposées sur des lignes (43, 44) définissant les ouvertures de grille (41), et
dans laquelle la au moins une partie de soudure linéaire ou la pluralité de parties de soudure en pointillés (61b) forment un angle aigu de pas plus de 60 degrés par rapport à la direction longitudinale de pale.

5. Pale d'éolienne selon la revendication 4, dans laquelle la au moins une partie de soudure linéaire (61a) ou la pluralité de parties de soudure en pointillés (61b) comprend une première partie orientée vers une première direction (45) formant un premier angle qui est un angle aigu de pas plus de 60 degrés par rapport à la direction longitudinale de pale, et une deuxième partie orientée vers une deuxième direction (46) formant un deuxième angle qui est un angle aigu de pas plus de 60 degrés par rapport à la direction longitudinale de pale, la deuxième partie coupant la première partie.

6. Pale d'éolienne selon l'une quelconque des revendications 3 à 5, dans laquelle une section transversale totale d'une partie du passage conducteur, la partie étant formée par la partie de soudure linéaire (61a) ou les parties de soudure en pointillés (61b), est proche de ou plus grande qu'une section transversale totale d'une partie du passage conducteur dans la section endommagée au niveau de laquelle la circulation du courant de foudre est interrompue.

7. Pale d'éolienne selon l'une quelconque des revendications 1 à 6, dans laquelle une taille de chacune des ouvertures de grille (41) de la grille de réparation (40) est plus petite qu'une taille de chacune des ouvertures de grille (23) de la grille principale (20).

8. Procédé de réparation d'une pale d'éolienne (10) qui comprend une grille principale (20) s'étendant de manière continue entre une partie de bout de pale (11) et une partie de pied de pale (12), la grille principale (20) ayant une conductivité et formant un passage conducteur destiné à conduire un courant de foudre, le procédé comportant les étapes consistant à :
placer une grille de réparation (40) sur une section endommagée (30) de la grille principale (20) qui interrompt une circulation du courant de foudre, la grille de réparation (40) comprenant une partie de grille destinée à compenser le passage conducteur formé par la grille principale (20) ; et
relier électriquement la grille de réparation (40) placée sur la section endommagée à la grille principale (20), le procédé étant **caractérisé en ce que**,
dans l'étape de mise en place de la grille de réparation (40), la grille de réparation (40) est prévue de façon à inclure une section de chevauchement (70) qui chevauche une zone de la grille principale (20) qui n'inclue pas la section endommagée (30), et
dans l'étape de raccordement électrique de la grille de réparation (40), la grille principale (20) et la section de chevauchement (70) sont électriquement reliées l'une à l'autre par l'intermédiaire d'une partie de raccordement électrique (60) comprenant au moins une soudure (61).

9. Procédé de réparation d'une pale d'éolienne selon la revendication 8, comportant en outre l'étape (53) de nettoyage d'une zone de la grille principale (20) sur laquelle la partie de raccordement électrique est configurée pour être disposée, après enlèvement de la section endommagée de la grille principale (20) ou élimination de la résine sur une surface de la section endommagée.

10. Procédé de réparation d'une pale d'éolienne selon la revendication 8 ou 9, dans laquelle, dans l'étape de raccordement électrique de la grille de réparation, la soudure (61) est appliquée entre la grille principale (20) et la grille de réparation (40) de telle sorte que la grille principale et la grille de réparation sont électriquement reliées l'une à l'autre par l'intermédiaire de la soudure (61).

11. Procédé de réparation d'une pale d'éolienne selon l'une quelconque des revendications 8 à 10, selon lequel l'étape de raccordement électrique de la grille de réparation (40) comprend au moins une d'une application d'au moins une partie de soudure linéaire (61a) ayant une largeur prédéterminée le long des ouvertures de grille (41) de la grille de réparation (40), ou d'une application d'une pluralité de parties de soudure en pointillés (61b) disposées sur des lignes (43, 44) qui définissent les ouvertures de grille.

12. Procédé de réparation d'une pale d'éolienne selon l'une quelconque des revendications 8 à 11, comportant en outre les étapes consistant à :
obtenir à l'avance de l'information de pré-réparation qui indique une conductivité du passage conducteur entre la partie de bout de pale (11) et la partie de pied de pale (12) avant que la section endommagée soit produite ;
obtenir de l'information de post-réparation qui indique une conductivité du passage conducteur entre la partie de bout de pale (11) et la partie de pied de pale (12) après l'étape de raccordement électrique de la grille de réparation (40) ; et
évaluer une validité d'une réparation effectuée sur la grille principale (20) avec la grille de réparation (40), sur la base d'un résultat de comparaison entre l'information de pré-réparation et l'information de post-réparation.
